# EUROPÄISCHE PATENTANMELDUNG

(11) **EP 2 110 722 A1**
(43) Veröffentlichungstag der Anmeldung: **21.10.2009**
(21) Anmeldenummer: 08007536.9
(22) Anmeldetag: 17.04.2008
(51) Int. Cl.: G05B 19/05, G05B 19/418

(54) **System zur Simulation automatisierungstechnischer Anlagen**

(71) Anmelder: SIEMENS AKTIENGESELLSCHAFT, 80333 München (DE)
(72) Erfinder: Die Erfindernennung liegt noch nicht vor

(57) **Zusammenfassung**

Automatisierungstechnische Anlage werden zur Automatisierung industrieller Prozesse wie z. B. der Steuerung von Fliessbändern verwendet. Hier können nun viele Probleme entstehen, die zum Stau des Prozessgutes führen. Zur Behebung dieser Problematik werden beim Stand der Technik die Produktionsprozesse, die automatisierungstechnische Anlagen später ausführen, vor Inbetriebnahme simuliert. Es existieren damit aber durch die Verwendung von Simulationsprogrammen gemäss dem Stand der Technik zum einen sowie den Anlagen-Steuerprogrammen zum anderen zwei Welten im Hinblick auf Daten, Wertetyp etc., zwischen denen keine Zuordnung gegeben ist. Die Erfindung löst diese Problematik, indem eine übergeordnete Steuervorrichtung vorgesehen ist, in die ein logisches Modell der Anlage abgelegt ist. Daraus werden Simulationsmodelle und Steuerprogramme generiert. Die generierten Steuerprogramme weisen spezielle Datenbausteine auf, die die durch die Simulation zu optimierenden Parameter enthalten. Die generierten Simulationsmodelle erzeugen diese Parameter als Ergebniswerte der Simulationsauswertungsalgorithmen, und führen diese den speziellen Datenbausteinen der generierten Steuerprogramme automatisiert zu.

## Beschreibung

Automatisierungstechnische Anlagen werden zur Automatisierung industrieller Prozesse wie z. B. der Steuerung von Maschinen oder Fliessbänder verwendet. So erfordert beispielsweise das Befüllen von Flaschen oder das Verpacken von Lebensmitteln eine Anlage, deren Komponenten in besonderem Masse aufeinander abgestimmt sein müssen. Die Flaschen/ Lebensmittel werden auf einem Fliessband der Anlage zugeführt und dort über eine Mehrzahl von Stationen transportiert. In sog. Puffern wird das Prozessgut zur Befüllung/ Verpackung angehalten und anschliessend über weitere Fliessbänder weitertransportiert.

Unter Komponenten einer Automatisierungsanlage sollen hier alle am automatisierten Prozess teilnehmenden Komponenten verstanden werden. So gehören die am Automatisierungsprozess beteiligten Sensoren und Aktoren zu den in diesem Sinne zu verstehenden Anlagenkomponenten. Darüber hinaus werden aber auch von einer derartigen Automatisierungsanlage bearbeitete Werkstücke als Anlagenkomponenten verstanden.

Aufgrund der Vielzahl und der Komplexität der an einem Automatisierungsprozess beteiligten Komponenten weist auch die zur Steuerung der Komponenten vorgesehene Software/ Steuerprogramme in der Regel einen sehr hohen Komplexibilitätsgrad auf. Hieraus erwächst das Bestreben, bei Neuentwicklungen von Anlagen oder prozessbedingten Modifikationen bestehender Anlagen die Steuerprogramme vor der Inbetriebnahme der Anlage testen zu können. Dies geschieht in der Regel dadurch, dass die automatisierungstechnische Anlage und die realen Steuerungen mit der zu testenden Software simuliert werden. Neben einer erheblichen Kosten- und Zeitersparnis bringt dies den Vorteil, dass bei einer Neuentwicklung einer Anlage diese noch nicht existieren muss, wenn die Steuerungssoftware entwickelt ist und getestet werden soll.

Mit Hilfe eines Rechners werden die mechatronischen Komponenten der Anlage simuliert und auf diese Art und Weise sinnvolle Eingangssignale zu den vom Steuerungsprogramm generierten Ausgangssignalen erzeugt. Übliche Simulationsprogramme stellen in der Regel Verhaltensmodelle zur Verfügung, mit denen das Verhalten einzelner Anlagenkomponenten nachgebildet werden kann. Mit Hilfe dieser Verhaltensmodelle ist es möglich, abhängig von vorgegebenen Eingangswerten, die in der Regel von den Modellen anderer am Automatisierungsprozess beteiligten Komponenten erzeugt werden, Ausgangswerte zu berechnen und diese wiederum anderen Komponenten der Automatisierungsanlage bzw. deren Verhaltensmodellen als Eingangswert zur Verfügung zu stellen. In einer graphischen Oberfläche eines derartigen Simulationsprogramms werden die einzelnen realen Anlagenkomponenten daher in der Regel durch graphische Symbole repräsentiert, die Ein- und Ausgänge aufweisen, welche mit entsprechenden Ein- und Ausgangswerten belegt werden können.

Um nun eine automatisierungstechnische Anlage mit vielen einzelnen Komponenten zu simulieren, wird der Benutzer die graphischen Objekte, die den jeweiligen Komponenten zugeordnet sind, über die Ein- und Ausgänge miteinander verbinden, um so den Informationsfluss innerhalb der realen Anlage nachzubilden. Je komplexer die zu modulierende automatisierungstechnische Anlage ist, desto schwieriger und fehleranfälliger wird die Generierung eines Simulationsmodells für die komplette automatisierungstechnische Anlage.

In automatisierungstechnischen Anlagen können nun viele Probleme entstehen, die zum Stau des Prozessgutes führen. Damit wird der Durchsatz der Anlage beeinträchtigt (erniedrigt). Als Ursache sind unterschiedlichen Bearbeitungszeiten der Varianten, Rüstzeiten der Maschinen und Teilanlagen im Falle einer erforderlichen Umkonfigurierung der Anlage sowie der stochastischen Ausfall einzelner Maschinen und Teilanlagen zu nennen.

Zur Behebung dieser Problematik werden beim Stand der Technik die Produktionsprozesse, die automatisierungstechnische Anlagen später ausführen, vor der Inbetriebnahme simuliert. Dies erfolgt durch Programme wie z. B. das Programm Plant Simulation. Dieses Programm untersucht im Zuge der Simulation den Materialfluss einer solchen Anlage auf Durchsatz und Bearbeitungszeiten hin. Hierzu wird ein logischer Aufbau (Modell) der Anlage im Programm abgebildet, wodurch verschiedene Ausfallstrategien auf Basis unterschiedlicher Ausfallwahrscheinlichkeiten der einzelnen Stationen durchgespielt werden können.

Ferner wird der Prozess der Anlage auf die Produktion von einer gewissen Anzahl von Variantenkombinatonen unter dem Auftreten von stochastischen Störungen verifiziert. Durch die Simulation wird erreicht, dass automatisierungstechnische Anlagen in einer robusten Konfiguration mit einer hinreichenden Parametrierung der Steuerungen erstellt werden können.

Aus dem Stand der Technik ist ferner ein weiteres Programm, der Automation Designer bekannt. Dieses Programm erzeugt die eigentlichen Steuerprogramme für die PLC-Steuerung. Unter einem PLC (Programmable Logic Control) wird ein digitaler Computer bzw. eine Steuervorrichtung verstanden, die zur Automatisierung industrieller Prozesse wie beispielsweise der Steuerung von Maschinen oder Fliessbänder verwendet werden.

Problematisch an diesem Stand der Technik ist, dass durch das Simulatiosprogramm (z. B. Plant Simulation) zum einen sowie dem PLC-Steuerprogramm zum anderen zwei Welten im Hinblick auf Daten, Wertetyp etc. gegeben sind, zwischen denen keine Zuordnung gegeben ist. Vom Simulationsprogramm ermittelte Werte müssen händisch in das PLC-Steuerpgrogramm eingegeben werden, was sich in der Praxis als zeitaufwändiges und fehleranfälliges Verfahren erweisen kann.

Der Erfindung liegt die Aufgabe zugrunde, einen Weg aufzuzeigen, wie die Simulation der Steuerpgrogamme automatisierungstechnischer Anlage effizienter gestaltet werden kann.

Die Erfindung wird ausgehend von den im Oberbegriff von Patentanspruch 1 angegebenen Merkmale durch die im kennzeichnenden Teil beanspruchten Merkmale gelöst.

Der Vorteil der Erfindung ist darin zu sehen, dass die Anlagensteuerung stets optimal auf die anstehende Produktion eingestellt wird. Hierzu wird eine Optimierung der Parameter der Anlagensteuerung durch den Simulationsprozess durchgeführt. Dies erfolgt beim Simulationsprozess dadurch,dass eine Vielzahl von Parametern getestet werden und für bestimmte Parameter eine optimale Wertefunktion bestimmt wird. Mit diesen Wertefunktionen werden dann über eine Kommunikationsverbindung die im Simulationsprozess generierten Parameter automatisch in die Steuerungen übertragen, ohne dass eine händische Eingabe erforderlich ist. Dazu sind in dem Steuerungsprogramm entsprechende Datenbausteine hinterlegt, in die die Simulation die als optimal ermittelten Werte einträgt.

Das System erkennt damit bereits vor dem Start der Produktion mögliche Stauzustände in dem Materialfluss in der Anlage. Zu deren Vermeidung und zur Optimierung des Durchsatzes der Anlage optimiert das System die Parameter der Steuerung bzgl. der optimalen Größe von Puffern, den Geschwindigkeiten einzelner Stationen und Maschinen etc.. Zudem können durch die Optimierung der Puffer Lagerschäden durch Überlagerung kurzlebiger Zwischenprodukte vermieden werden.

Außerdem können die Anlage und die einzelnen Maschinen und Teilanlagen mit einem niedrigeren Energieverbrauch und einem geringeren Verschleiss betrieben werden, da sie mit der optimalen Geschwindigkeit arbeiten.

Die Erfindung wird im folgenden anhand eines figürlich dargestellten Ausführungsbeispiels näher erläutert.

### Es zeigen:

- Fig. 1: das erfindungsgemässe Simulationssystem
- Fig. 2: die Modellierung der Daten im Automation Designer

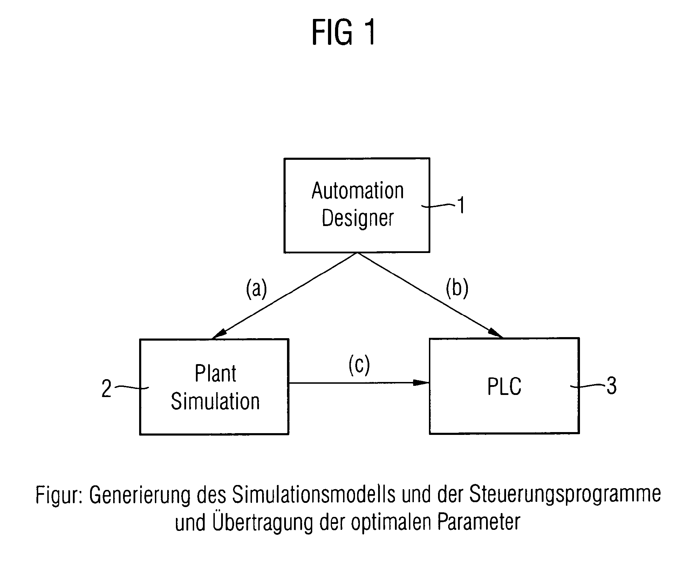

Fig. 1 zeigt die Verhältnisse gemäss der Erfindung. Das erfindungsgemäße System besteht aus insgesamt drei Komponenten:
- einem übergeordneten Steuerprogramm oder Engineeringsystem (1),
- dem Simulationssystem (2) und
- dem Steuerprogramm (3)

Im übergeordneten Steuerprogramm oder Engineeringsystem (1) ist ein Modell der Anlage abgelegt. Darin sind alle Elemente durch Ressourcen abgebildet. Eine Resource beschreibt ein Element einer automatisierungstechnischen Anlage. Ferner weist eine Resource eine Mehrzahl von Facetten auf, welche damit ein Fragment einer Resource darstellt.

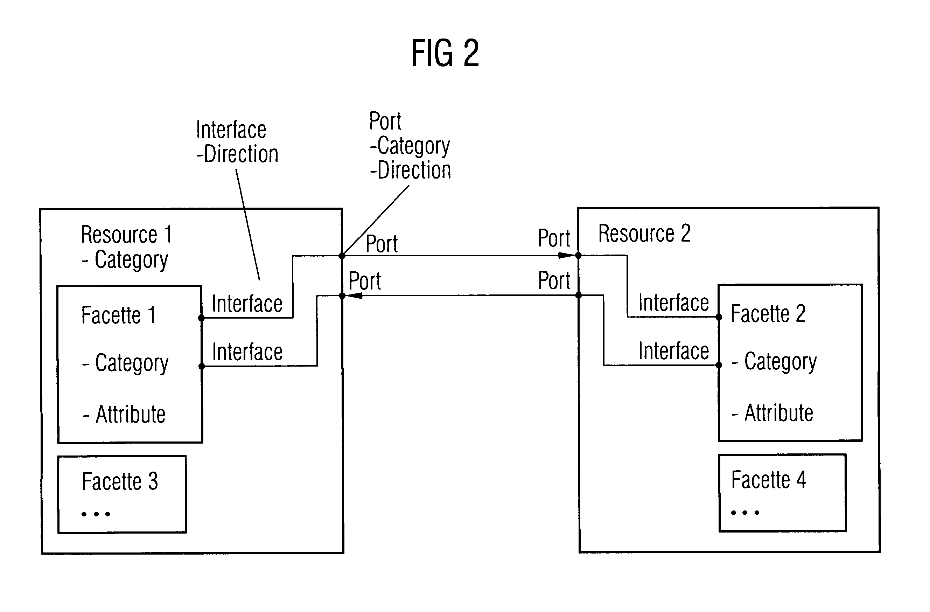

Fig. 2 zeigt die Modellierung der Daten im Detail. Es ist also jeder Komponente der Automatisierungsanlage ein Ressourcenobjekt zugeordnet, wobei jedem dieser Ressourcenobjekte Portdaten zugeordnet sind. Die einem Ressourcenobjekt zugeordneten Portdaten werden für jeden Port des Ressourcenobjektes angelegt und kennzeichnen die über den jeweiligen Port austauschbaren Daten. Eine solche Kennzeichnung geht deutlich über die reine Definition eines zulässigen Datentyps hinaus, denn sie soll eine automatische Zuordnung von miteinander kompatiblen Ein- und Ausgängen verschiedener Ressourcenobjekte ermöglichen. Das System umfasst entsprechende Mittel, mit denen anhand der Portdaten die zum Werteaustausch zu verbindenden Ports ermittelt werden können. Auf diese Art und Weise entfällt das händische "Verdrahten" der Ein- und Ausgänge dieser Verhaltensmodellpräsentationen.

Darüber hinaus enthält jedes Ressourcenobjekt ein Programmfragment, in dem der Code abgespeichert ist, der die dem Ressourcenobjekt zugehörige Anlagenkomponente bzw. deren Verhalten nachbildet, sofern dieser Code mit einem geeigneten Simulationsprogramm ausgeführt wird.

Die Ressourcen verfügen somit über Programmfragmente oder Facetten, die alle Informationen, Beschreibungen und Simulationsmodell- und Steuerprogrammcodefragmente enthalten, die für die Erstellung der Simulationsmodelle 2 und der Steuerprogramme 3 notwendig sind. Dabei sind die einzelnen Facetten über Port- und Interfaceverbindungen so miteinander verknüpft, dass die logischen Verbindungen zwischen den einzelnen Informationen und die Signalflüsse in der Anlage abgebildet sind.

Aus diesem Modell generiert nun das übergeordnete Steuerprogramm 1 in einem Schritt a die Simulationsmodelle 2 und in einem Schritt b das Steuerprogramm 3. Die Steuerprogramme 3 wiesen spezielle Datenbausteine auf, die die durch die Simulation zu optimierenden Parameter enthalten. Entsprechend verfügen die generierten Simulationsmodelle 2 ebenfalls über diese Parameter als Ergebniswerte der Simulationsauswertungsalgorithmen. Die Simulationsmodelle 2 sind dabei integraler Bestandteil des Simulationsprogrammes (z. B. Plant Simulation).

Darüber hinaus ist in dem Simulationsmodell 2 eine Konfiguration hinterlegt, wie die optimierten Parameter in die Datenbausteine des Steuerprogrammes 3 übertragen werden. Die Übertragung erfolgt automatisiert in einem Schritt c.

In der Praxis hat ein Automatisierungstechniker im Automation Designer, der das übergeordnete Steuerprogramm 1 repräsentiert, ein Modell einer automatisierungstechnischen Anlage aufgebaut. Dazu hat er für die Elemente der Anlage Ressourcen angelegt. Diesen Ressourcen hat er Facetten hinzugefügt, die jeweils fragmentartig die Ressource hinsichtlich der Simulation bzw. der Steuerung der Anlage beschreiben. Anschließend sind die Signalflüsse in der Anlage und zwischen der Simulation und den Steuerungen durch Port- und Interfaceverbindungen abgebildet.

Aus dem Automation Designer 1 wird anhand der Facetten und der Abbildung der Signalflüsse ein Simulationsmodell 2 für Plant Simulation und das PLC-Steuerprogramm 3 erstellt. Dabei verfügt das Simulationsmodell 2 über Auswertealgorithmen zur Generierung der optimalen Parameter für die Steuerprogramm 3 und über eine Konfiguration, wie diese Parameter an die Steuerungen übertragen werden können.

Im Programm Plant Simulation wird mit dem Simulationsmodell die Produktion eines Tages simuliert. Dazu ist bereits im Vorfeld die Reihenfolge der zu produzierenden Varianten optimiert worden. Nun sollen die Parameter der Anlagensteuerung optimiert werden. Dabei ist zu berücksichtigen, dass es sich bei dem Prozessgut um Lebensmittel handelt. Diese sollten zwischen den einzelnen Prozessschritten nicht unnötig lange in Puffern verbleiben, da sie dort zum einen ungekühlt und zum anderen unverpackt sind.

Das Simulationsprogramm berechnet iterativ mit unterschiedlichen stochastisch auftretenden Störungen in der Anlage die notwendigen Größen der Puffer. Dabei berücksichtigt es auch die maximalen Lagerzeiten der einzelnen Zwischenprodukte. Des Weiteren werden dabei auch die optimalen Arbeitsgeschwindigkeiten der einzelnen Stationen und Maschinen bestimmt. Schliesslich überträgt das Simulationsmodell die optimierten Parameter an die Steuerungen in Schritt c.

Soll in der automatisierungstechnischen Anlage eine andere Variante zur Anwendung gelangen - z. B. dass anstelle der Befüllung von Flaschen Lebensmittel verpackt werden sollen - sind im PLC-Steuerprogramm andere Parameter zu wählen und vom Simulationsprogramm zu optimieren. Hierzu ist das entsprechende Modell im Programm Automation Designer 1 zu erstellen und eine Simulation des neuen Prozesses zu starten. Als Ergebnis werden optimierte Parameter generiert, die dem neuen PLC-Steuerprogramm zugeführt werden (Schritt c).

Ferner sind die Parameter für die speziellen Datenbausteine (3) nicht nur durch Algorithmen in der Simulation bestimmt. Sie können auch einfach Werte enthalten, die in das Simulationsprogramm eingegeben werden. Damit sind die Werte für die Parameter nicht immer durch automatisierte Algorithmen definiert, sondern können auch in Interaktion mit dem Anwender des Simulationsprogrammes bestimmt werden. Der Anwender gibt damit diese Parameter als Startwerte vor.

## Patentansprüche

1. System zur Simulation automatisierungstechnischer Anlagen, mit einer übergeordneten Steuervorrichtung (1), einem Simulationsprogramm (2) und einem Steuerprogramm (3),
**dadurch gekennzeichnet,**
**dass** in der übergeordneten Steuervorrichtung (1) ein logisches Modell der automatisierungstechnischen Anlage abgelegt ist,
**dass** die übergeordnete Steuervorrichtung (1) aus diesem Modell Simulationsmodelle (2) und Steuerprogramme (3) generiert (a, b),
**dass** die generierten Steuerprogramme (3) spezielle Datenbausteine aufweisen, die die durch die Simulation zu optimierenden Parameter enthalten,
**dass** die generierten Simulationsmodelle (2) diese Parameter als Ergebniswerte der Simulationsauswertungsalgorithmen erzeugen, und
**dass** die generierten Simulationsmodelle (2) diese den speziellen Datenbausteinen der generierten Steuerprogramme (3) zuführen (c).

2. System nach Anspruch 1,
**dadurch gekennzeichnet,**
**dass** in dem logischen Modell alle Elemente der Anlage durch Ressourcen abgebildet sind.

3. System nach Anspruch 1, 2
**dadurch gekennzeichnet,**
**dass** die Ressourcen über Facetten verfügen, die alle Informationen, Beschreibungen und Simulationsmodell- und Steuerungsprogrammcodefragmente enthalten, die für die Erstellung der Simulationsmodelle und der Steuerungsprogramme notwendig sind.

4. System nach einem der vorstehenden Ansprüche,
**dadurch gekennzeichnet,**
**dass** die einzelnen Facetten über Port- und Interfaceverbindungen so miteinander verknüpft sind, dass die logischen Verbindungen zwischen den einzelnen Informationen und die Signalflüsse in der Anlage abgebildet sind.

5. System nach einem der vorstehenden Ansprüche,
**dadurch gekennzeichnet,**
**dass** die generierten Simulationsmodelle (2) optimierte Parameter als Ergebniswerte der Simulationsauswertungsalgorithmen erzeugen.

6. System nach einem der vorstehenden Ansprüche,
**dadurch gekennzeichnet,**
**dass** die generierten Simulationsmodelle (2) die maximalen Lagerzeiten der einzelnen Zwischenprodukte berücksichtigen.

7. System nach einem der vorstehenden Ansprüche,
**dadurch gekennzeichnet,**
**dass** die generierten Simulationsmodelle (2) die optimale Arbeitsgeschwindigkeit der einzelnen Stationen und Maschinen definieren.

8. System nach einem der vorstehenden Ansprüche,
**dadurch gekennzeichnet,**
**dass** der Anwender des Simulationsprogrammes die Parameterwerte für die speziellen Datenbausteine (3) bestimmt, indem er diese Parameter als Startwerte vorgibt.
